# EUROPÄISCHE PATENTSCHRIFT

(11) **EP 0 878 362 B1**
(45) Veröffentlichungstag und Bekanntmachung des Hinweises auf die Patenterteilung: **12.10.2005**
(21) Anmeldenummer: 98106957.8
(22) Anmeldetag: 16.04.1998
(51) Int. Cl.: B60R 21/20

(54) **Seitenaufprallschutzeinrichtung für die Insassen eines Fahrzeuges**
Side impact protection device for vehicle passenger
Dispositif de protection en cas de choc latéral pour l'occupant d'un véhicule

(30) Priorität: 16.05.1997 DE 19720585
(43) Veröffentlichungstag der Anmeldung: 18.11.1998
(73) Patentinhaber: Dr.Ing.h.c. F. Porsche Aktiengesellschaft, 70435 Stuttgart (DE)
(72) Erfinder: Heinz, Martin, 70182 Stuttgart (DE); Trick, Fred, 71277 Rutesheim (DE); Bögge, Herbert, 75446 Wiernsheim (DE); Dietrich, Günter, 71691 Freiberg (DE); Guhl, Hermann, 72108 Rottenburg (DE)

(56) Entgegenhaltungen:
- EP-A- 0 363 986
- EP-A- 0 675 026
- EP-A- 0 711 627
- DE-A- 3 315 535
- DE-A- 4 214 662
- DE-A- 19 505 214
- DE-C- 4 311 241
- DE-C- 4 437 773

## Beschreibung

Die Erfindung betrifft eine Seitenaufprallschutzeinrichtung für einen Insassen eines Fahrzeuges gemäß dem Oberbegriff des Anspruchs 1, der aus der DE 19 505 214 A bekannt ist.

Aus der DE 195 11 511 A1 geht eine Seitenaufprallschutzeinrichtung für einen Insassen eines Fahrzeuges hervor, wobei ein aus einem Gehäuse, einem Gasgenerator und einem zusammengefalteten Gassack bestehendes vorgefertigtes Einbaumodul am Türinnenblech einer Seitentür angebracht ist. Am vorgelagerten Verkleidungsteil ist eine Austrittsöffnung vorgesehen, die in Ruhestellung des Gassackes durch eine Abdeckung verschlossen ist. Bei dieser Konstruktion ist die einteilig ausgebildete Abdeckung lediglich am Gassack befestigt. Nachteilig an dieser Anordnung ist, daß beim Entfalten des Gassackes die Abdeckung in Richtung des zu schützenden Insassen bewegt wird, was unter Umständen zu Verletzungen führen kann. Ferner ist es schwierig den Einbaumodul mit der Abdeckung so am Türinnenblech zu positionieren, daß einerseits ein gleichbleibender umfangseitiger Spalt zwischen Abdeckung und der Austrittsöffnung am Verkleidungsteil erzielt wird und daß andererseits die Abdeckung außenhautbündig zum angrenzenden Verkleidungsteil ausgerichtet ist.

Aufgabe der Erfindung ist es, eine Abdeckung für eine Austrittsöffnung eines Gassackes so weiterzuentwickeln, daß die Abdeckung in Ruhestellung der Seitenaufprallschutzeinrichtung eine funktionelle und optische Einheit mit dem Verkleidungsteil bildet und daß beim Entfalten des Gassackes die Abdeckung nicht in Berührung mit dem zu schützenden Insassen gelangen kann.

Erfindungsgemäß wird diese Aufgabe durch die Merkmale des Anspruchs 1 gelöst. Weitere, die Erfindung in vorteilhafter Weise ausgestaltende Merkmale enthalten die Unteransprüche.

Die mit der Erfindung hauptsächlich erzielten Vorteile sind darin zu sehen, daß die am Verkleidungsteil befestigte, aus einem äußeren Rahmenteil und zumindest zwei einstückig mit dem Rahmenteil verbundenen, übereinanderliegenden Klappenhälften bestehende Abdeckung in Ruhestellung der Seitenaufprallschutzeinrichtung stets lagerichtig zum Verkleidungsteil positioniert ist und daß beim Entfalten des Gaskissens die verschwenkbaren Klappenhälften nicht in Kontakt mit dem zu schützenden Insassen gelangen. Die Abdeckung ist einfach und kostengünstig herstellbar. Die Klappenhälften sind auf der dem Fahrgastraum zugekehrten Seite mit einem dekorativen Bezug aus Leder, Kunstleder oder einer Folie versehen, wobei in einem gemeinsamen Verbindungsbereich beider Klappenhälften bzw. des Bezuges eine Reißnaht vorgesehen ist.

Im Ausführungsbeispiel ist die Abdeckung aus einem leichtgewichtigen, spritzfähigen Werkststoff (z.B. Santoprene) hergestellt und zwar im Spritzgußverfahren, wobei zwischen dem umlaufenden äußeren Rahmenteil und der angrenzenden Außenkontur der Klappenhälften zumindest bereichsweise eine Schwächung vorgesehen ist.

Im gemeinsamen Verbindungsbereich beider Klappenhälften verlaufen die Klappenhälften mit geringem Abstand zueinander; in bestimmten Abständen sind schmale Verbindungsstege zwischen den angrenzenden Klappenhälften vorgesehen. Um eine definierte Schwenkbewegung beider Klappenhälften zu gewährleisten, sind innenseitig zwischen dem außenliegenden Rahmenteil und der angrenzenden Klappenhälfte jeweils dünnwandige Haltebleche vorgesehen, die mit dem Rahmenteil und der jeweiligen Klappenhälfte verbunden sind.

Ein Ausführungsbeispiel der Erfindung ist in der Zeichnung dargestellt und wird im folgenden näher erläutert.

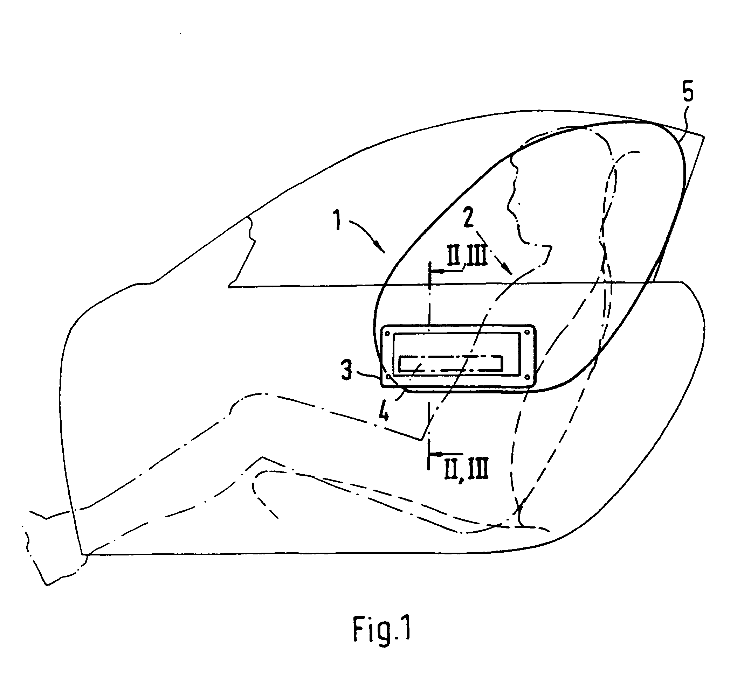

Es zeigt
- Fig. 1: eine Teilseitenansicht auf eine Seitenaufprallschutzeinrichtung für einen Insassen eines Fahrzeuges,
- Fig. 2: einen Schnitt nach der Linie II-II der Fig. 1 in Ruhestellung der Seitenaufprallschutzeinrichtung in größerer Darstellung,
- Fig. 3: einen Schnitt nach der Linie III-III der Fig. 1 in Betriebsstellung der Seitenaufprallschutzeinrichtung,

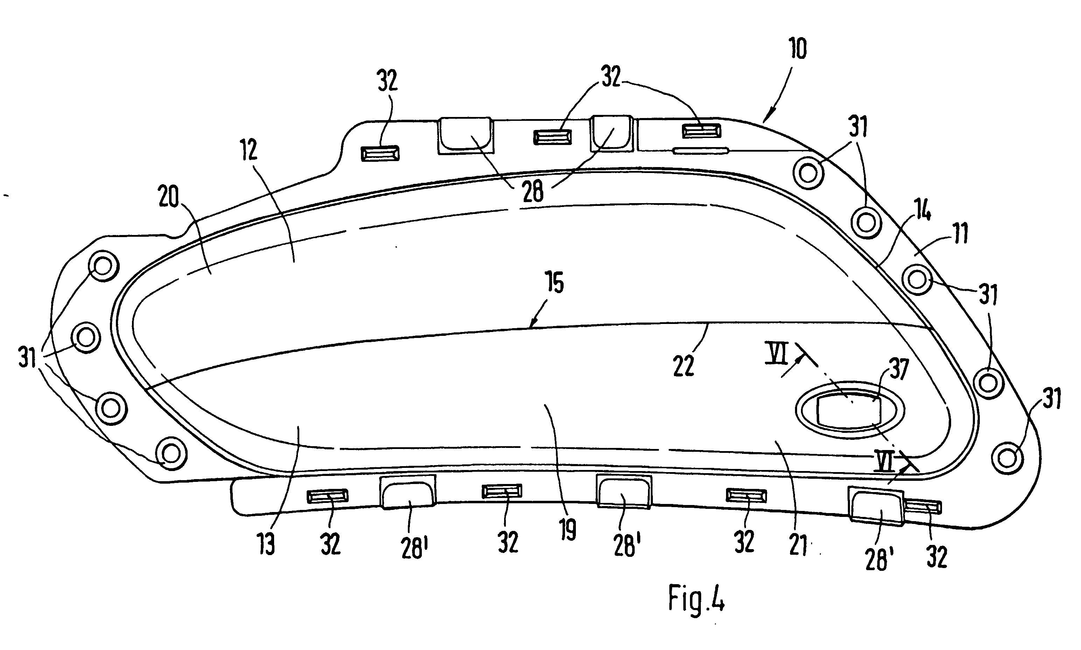

- Fig. 4: eine Ansicht in Pfeilrichtung R der Fig. 2 auf die Abdeckung,
- Fig. 5: eine Ansicht in Pfeilrichtung S der Fig. 2 auf die Abdeckung und
- Fig. 6: einen Schnitt nach der Linie VI-VI der Fig. 4.

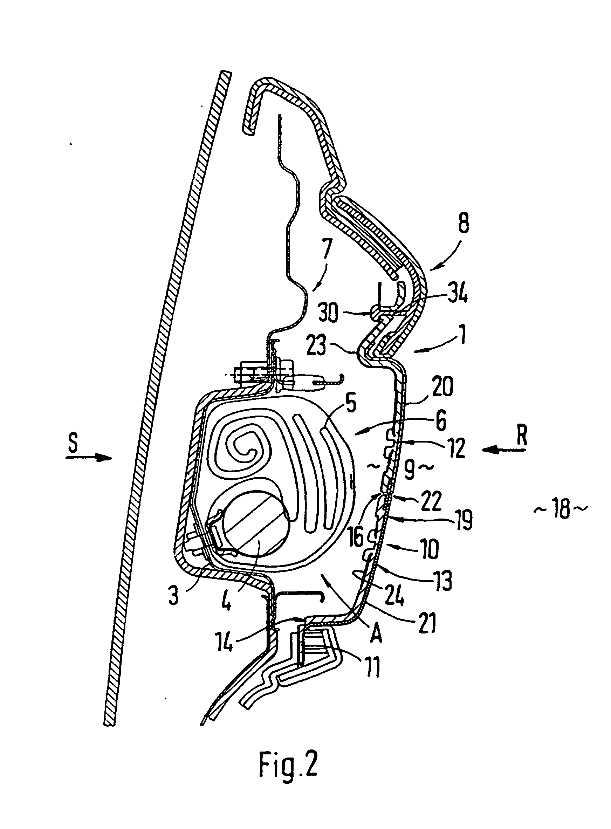

Eine Seitenaufprallschutzeinrichtung 1 für einen Insassen 2 umfaßt ein Gehäuse 3, einen Gasgenerator 4 und einen zusammengefalteten Gassack 5, wobei das Gehäuse 3, der mit dem Gehäuse 3 verbundene Gasgenerator 4 und der Gasssack 5 ein vorgefertigtes Einbaumodul 6 bilden, das an seinem seitlichen Aufbauteil 7 in Lage gehalten ist. An einem aufrechten Wandabschnitt eines dem Einbaumodul 6 vorgelagerten Verkleidungsteiles 8 ist eine Austrittsöffnung 9 für den aufgeblasenen Gassack 5 vorgesehen, wobei die Austrittsöffnung 9 in zusammengefalteter Ruhestellung des Gassackes 5 durch eine Abdeckung 10 verschlossen ist (Fig. 2).

Im Ausführungsbeispiel ist das Einbaumodul 6 an einem Türinnenblech befestigt und das vorgelagerte Verkleidungsteil 8 wird durch eine Türinnenverkleidung gebildet. Das Einbaumodul 6 könnte jedoch auch an einer feststehenden Seitenwand angebracht sein, wobei das Verkleidungsteil 8 dann durch eine vorgelagerte Seitenverkleidung gebildet wird.

Erfindungsgemäß umfaßt die Abdeckung 10 im Ausführungsbeispiel ein äußeres, am angrenzenden Verkleidungsteil 8 befestigtes Rahmenteil 11 sowie zwei übereinanderliegend angeordnete, einstückig mit dem Rahmenteil 11 ausgebildete Klappenhälften 12, 13. Die Klappenhälften 12, 13 sind an dem dem äußeren Rahmenteil 11 zugekehrten Rand mit Ausnahme eines oberen und eines unteren Scharnierbereiches über eine Schwächung 14 (Aufreißlinie) an das äußere Rahmenteil 11 angeschlossen. Im Bereich der Schwächung 14 liegt die Wanddicke etwa zwischen null und 0,4 mm, wogegen die Wanddicke in den Scharnierbereichen etwa 0,8 bis 1,2 mm beträgt. In einem gemeinsamen, etwa horizontal ausgerichteten Verbindungsbereich 15 verlaufen beide Klappenhälften 12, 13 mit geringem Abstand zueinander (Spalt 16); in Abständen von etwa 60mm sind beide Klappenhälften 12, 13 durch mehrere schmale aufrechte Verbindungsstege 17 miteinander verbunden. Beide Klappenhälften 12, 13 sind auf der einen dem Fahrgastraum 18 zugekehrten Seite mit einem dekorativen Bezug 19 versehen. Der Bezug 19 wird durch Leder, Kunstleder, eine Folie oder dergleichen gebildet.

Gemäß einer ersten Ausführungsform besteht der Bezug 19 aus zwei Hälften 20, 21, die benachbart dem gemeinsamen Verbindungsbereich 15 beider Klappenhälften 12, 13 über eine etwa horizontal ausgerichtete Reißnaht 22 miteinander verbunden sind. Die Reißnaht 22 bildet eine Sollbruchstelle beim Aufblasen des Gassackes 5.

Es könnte jedoch auch ein einstückiger Bezug 19 vorgesehen sein, der benachbart dem gemeinsamen Verbindungsbereich 15 eine Sollbruchstelle aufweist. Die Sollbruchstelle kann beispielsweise durch eine innenseitig vorgesehene Laserreißnaht am Bezug 19 gebildet werden.

Im Ausführungsbeispiel wird die Abdeckung 10 durch ein einstückiges, etwa 2,5 mm dickes Spritzgußteil aus Santoprene gebildet. Es können aber auch andere geeignete Werkstoffe zur Herstellung der Abdeckung 10 verwendet werden. Zur Erzielung einer definierten Schwenkbewegung der Klappenhälften 12, 13 beim Entfalten des Gassackes 5 sind innenseitig an beiden Klappenhälften 12, 13 dünnwandige Haltebleche 23, 24 vorgesehen, die jeweils das außenliegende Rahmenteil 11 mit der angrenzenden Klappenhälfte 12 bzw. 13 zusätzlich zum Scharnierbereich verbinden.

Jedes Halteblech 23, 24 aus dünnwandigem Aluminiumblech umfaßt jeweils einen langgestreckten Befestigungsflansch 25, 25', der auf der dem Fahrgastraum 18 abgekehrten Seite der Klappenhälfte 12, 13 anliegt und mit dieser über mehrere Ultraschallschweißungen 29 fest verbunden ist. An den Befestigungsflansch 25, 25' schließt sich ein relativ schmaler Scharnierabschnitt 26, 26' an, der mit einem äußeren Halteabschnitt 27, 27' verbunden ist. Der Halteabschnitt 27, 27' liegt an der Rückseite des äußeren Rahmenteils 11 an. Zumindest ein U-förmiger Bügelabschnitt 28, 28' des Halteabschnitts ist um die Außenseite des Rahmenteils 11 herumgeführt (Einhakverbindung). Das umlaufende Rahmenteil 11 der Abdeckung 10 ist mehrfach mit dem angrenzenden Verkleidungsteil 8 durch Ultraschallschweißungen 30 verbunden. Hierzu sind am Rahmenteil 11 und an den Halteblechen 23, 24 örtlich kreisrunde oder rechteckförmige Öffnungen 31, 32 vorgesehen, durch die vorstehende zapfenartige Schweißdome 33 oder Schweißfahnen 34 des Verkleidungsteiles 8 hindurchgesteckt werden. Die vorstehende Bereiche der Schweißdome 33 bzw. der Schweißfahnen 34 werden anschließend mittels Ultraschall verschweißt, wodurch eine feste Verbindung zwischen dem Rahmenteil 11 der Abdeckung 10 und dem Verkleidungsteil 8 erzielt wird.

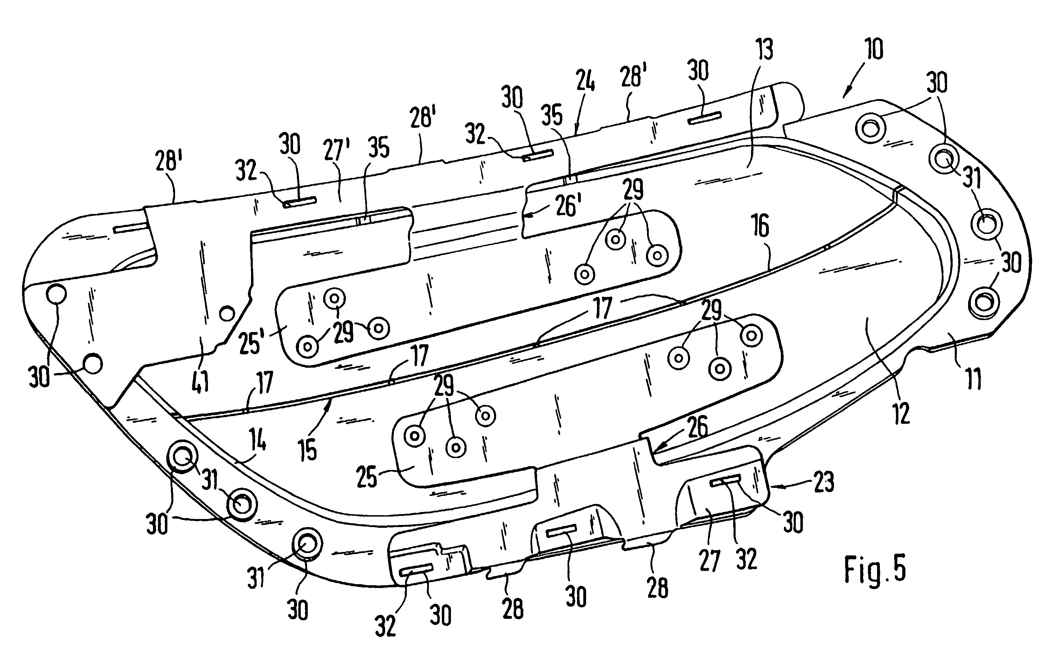

Beiderseits des jeweiligen Scharnierabschnitts 26, 26' sind zwischen Rahmenteil 11 und angrenzender Klappenhälfte 12, 13 Reißstopper 35 vorgesehen, die durch aufrechte Stege im Bereich der Schwächung 14 gebildet werden (Fig. 5).

Ferner weist der obere Klappenabschnitt 12 beiderseits des Scharnierabschnitts 26 des Halteblechs 23 mehrere aufrechte Versteifungsrippen auf (nicht näher dargestellt).

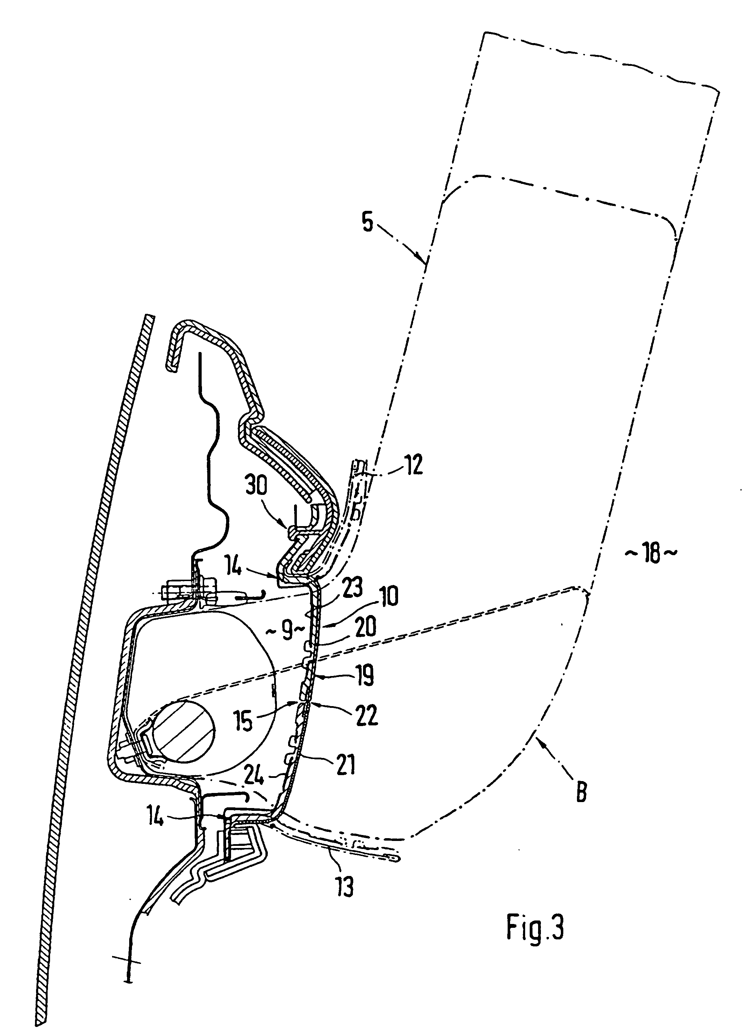

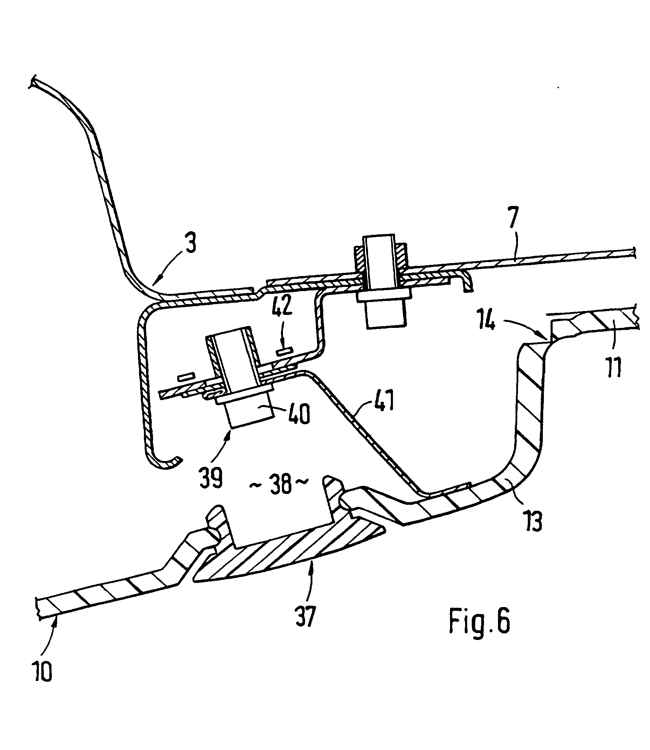

An der unteren Klappenhälfte 13 ist in einem vorderen Bereich eine durch einen Stopfen 37 verschließbare Montageöffnung 38 vorgesehen, durch die eine Befestigungsschraube 39 für die Abdeckung 10 einsetzbar ist. Ein Schraubenkopf 40 stützt sich an einem Fortsatz 41 des unteren Halteblechs 24 ab und die Befestigungsschraube 39 ist in eine Einschiebmutter 42 des Gehäuses 3 eingeschraubt (Fig. 6). Die beiden Klappenhälften 12, 13 nehmen bei aufgeblasenem Gassack 5 die in Fig. 3 strichpunktiert dargestellten Positionen ein.

## Patentansprüche

1. Seitenaufprallschutzeinrichtung für einen Insassen eines Fahrzeuges in Form eines aufblasbaren Gassackes (5), wobei an einem aufrechten Wandabschnitt eines vorgelagerten Verkleidungsteiles (8) eine Austrittsöffnung (9) für den Gassack (5) vorgesehen ist, die in zusammengefalteter Ruhestellung des Gassackes (5) durch eine Abdeckung (10) verschlossen ist und die Abdeckung (10) ein am angrenzenden Verkleidungsteil (8) befestigbares umlaufendes äußeres Rahmenteil (11), ein vom äußeren Rahmenteil (11) umgebenes inneres Formteil und auf der dem Insassen zugewandten Seite einen zweigeteilten, durch eine Reißnaht (22) miteinander verbundenen dekorativen Bezug (19) umfasst, wobei das innere Formteil bei einer Airbag-Auslösung in zwei verschwenkbare Klappenhälften (12, 13) getrennt wird, **dadurch gekennzeichnet, dass** das äußere Rahmenteil (11) und die beiden Klappenhälften (12, 13) einstückig ausgebildet sind , wobei die Klappenhälften (12, 13) mit Ausnahme eines oberen Scharnierbereiches und eines unteren Scharnierbereiches über eine umlaufende Schwächung (14) mit dem äußeren Rahmenteil (11) verbunden sind, wogegen im Bereich der Reißnaht (22) beide Klappenhälften (12, 13) mit geringem Abstand zueinander verlaufen und lediglich durch örtlich angeordnete schmale aufrechte Verbindungsstege (17) miteinander verbunden sind und dass innenseitig an beiden Klappenhälften (12, 13) dünnwandige Haltebleche (23, 24) vorgesehen sind, die jeweils das außenliegende Rahmenteil (11) und die angrenzende Klappenhälfte (12, 13) miteinander verbinden, wobei jedes Halteblech mit zumindest einem Bügelabschnitt (28, 28') um die Außenseite des Rahmenteils (11) herumgeführt ist.

2. Seitenaufprallschutzeinrichtung nach Anspruch 1, **dadurch gekennzeichnet, dass** zwischen dem äußeren Rahmenteil (11) und der angrenzenden Klappenhälfte (12, 13) - gegenüberliegend zum gemeinsamen Verbindungsbereich (15) - örtlich Aufreißstopper (35) in Form von aufrechten Stegen angeordnet sind.

3. Seitenaufprallschutzeinrichtung nach Anspruch 1, **dadurch gekennzeichnet, dass** für jede Klappenhälfte (12, 13) ein eigenes Bezugsteil (20, 21) vorgesehen ist und dass beide Bezugsteile (20, 21) über die Reißnaht (22) miteinander verbunden sind.

4. Seitenaufprallschutzeinrichtung nach Anspruch 1, **dadurch gekennzeichnet, dass** ein einteiliger Bezug (19) für beide Klappenhälften (12, 13) vorgesehen ist, der im gemeinsamen Verbindungsbereich (15) eine durch einen Laser hergestellte Reißnaht (22) aufweist.

5. Seitenaufprallschutzeinrichtung nach Anspruch 1, **dadurch gekennzeichnet, dass** jedes Halteblech (23, 24) über eine oder mehrere Ultraschallschweißungen (29) mit der angrenzenden Klappenhälfte (12, 13) verbunden ist.

6. Seitenaufprallschutzeinrichtung nach einem oder mehreren der vorangegangenen Ansprüche, **dadurch gekennzeichnet, dass** jedes Halteblech (23, 24) einen langgestreckten mit der Klappenhälfte (12, 13) verbundenen Befestigungsflansch (25, 25') aufweist, der über einen relativ schmalen Scharnierabschnitt (26, 26') mit einem äußeren Halteabschnitt (27, 27') verbunden ist und dass am äußeren Halteabschnitt (27, 27') bereichsweise die U-förmigen Bügelabschnitte (28, 28') vorgesehen sind.

7. Seitenaufprallschutzeinrichtung nach einem oder mehreren der vorangegangenen Ansprüche, **dadurch gekennzeichnet, dass** an einer Klappenhälfte (13) eine durch einen eingesetzten Stopfen (37) verschließbare Montageöffnung (38) vorgesehen ist, durch die eine Befestigungsschraube (39) zum Befestigen des dahinterliegenden Halteblechs (24) an einem Gehäuse (3) des Airbags einsetzbar ist.

8. Seitenaufprallschutzeinrichtung nach einem oder mehreren der vorangegangenen Ansprüche, **dadurch gekennzeichnet, dass** das Rahmenteil (11) der Abdeckung (10) und der äußere Halteabschnitt (27, 27') beider Haltebleche (23, 24) bereichsweise am angrenzenden Verkleidungsteil (8) durch Ultraschallschweißen (30) festlegbar sind.

9. Seitenaufprallschutzeinrichtung nach einem oder mehreren der vorangegangenen Ansprüche, **dadurch gekennzeichnet, dass** an der oberen Klappenhälfte (12) beiderseits des Scharnierabschnitts (26) des Haltebleches (23) mehrere aufrecht verlaufende Versteifungsrippen (36) angeordnet sind.

10. Seitenaufprallschutzeinrichtung nach einem oder mehreren der vorangegangenen Ansprüche, **dadurch gekennzeichnet, dass** die Abdeckung (10) durch ein einstückiges Spritzgussteil aus Santoprene gebildet wird.

## Claims

1. A side impact protection device in the form of an inflatable air bag (5) for an occupant of a vehicle, wherein an outlet opening (9) for the air bag (5) is provided in an upright wall portion of a lining part (8) mounted in front of it and is closed by a cover (10) in the folded inoperative position of the air bag (5), and the cover (10) comprises a circumferential outer frame part (11) fixable to the adjacent lining part (8), an inner shaped part surrounded by the outer frame part (11) and, on the side facing the occupant, a decorative covering (19) formed from two parts connected by a tearing seam (22), wherein the inner shaped part is separated into two pivotable flap halves (12, 13) when the air bag is activated, **characterised in that** the outer frame part (11) and the two flap halves (12, 13) are formed in one piece, wherein the flap halves (12, 13) are connected to the outer frame part (11) by a circumferential weakening (14), with the exception of an upper hinged region and a lower hinged region, whereas, in the region of the tearing seam (22), the two flap halves (12, 13) extend with slight mutual spacing and are connected to one another only by locally arranged, narrow, upright connecting webs (17), and **in that** thin-walled holding plates (23, 24) are provided on the inside of both flap halves (12, 13) and each connect the outer frame part (11) and the adjacent flap half (12, 13) to one another, wherein each holding plate has at least one clip part (28, 28') extending around the outside of the frame part (11).

2. A side impact protection device according to claim 1, **characterised in that** tearing stops (35) in the form of upright webs are arranged locally between the outer frame part (11) and the adjacent flap half (12, 13) opposite the common connecting region (15).

3. A side impact protection device according to claim 1, **characterised in that** an individual covering part (20, 21) is provided for each flap half (12, 13) and **in that** the two covering parts (20, 21) are connected to one another by the tearing seam (22).

4. A side impact protection device according to claim 1, **characterised in that** a one-piece covering (19) is provided for the two flap halves (12, 13) and, in the common connecting region (15), has a tearing seam (22) produced by a laser.

5. A side impact protection device according to claim 1, **characterised in that** each holding plate (23, 24) is connected to the adjacent flap half (12, 13) by one or more ultrasonic welds (29).

6. A side impact protection device according to one or more of the preceding claims, **characterised in that** each holding plate (23, 24) has an elongate mounting flange (25, 25') which is connected to the flap half (12, 13) and which is connected to an outer holding portion (27, 27') by a relatively narrow hinge part (26, 26'), and **in that** the U-shaped clip parts (28, 28') are provided on regions of the outer holding portion (27, 27').

7. A side impact protection device according to one or more of the preceding claims, **characterised in that** a mounting opening (38), which is closable by an inserted stopper (37), is provided in one flap half (13), and a fixing bolt (39) for fixing the holding plate (24) lying behind it to a housing (3) of the airbag is insertable through the mounting opening (38).

8. A side impact protection device according to one or more of the preceding claims, **characterised in that** regions of the frame part (11) of the cover (10) and regions of the outer holding portion (27, 27') of the two holding plates (23, 24) are securable to the adjacent lining part (8) by ultrasonic welds (30).

9. A side impact protection device according to one or more of the preceding claims, **characterised in that** a plurality of upright reinforcing ribs (36) are arranged on the upper flap half (12) on both sides of the hinge part (26) of the holding plate (23).

10. A side impact protection device according to one or more of the preceding claims, **characterised in that** the cover (10) is formed by a one-piece injection-moulding made of Santoprene.

## Revendications

1. Dispositif de protection contre une collision latérale selon la revendication 1, sur une section de paroi verticale d'un **caractérisé en ce que** pour chaque moitié de clapet (12, 13) est prévue son propre élément d'habillage (20, 21) et **en ce que** les deux éléments d'habillage (20, 21) sont reliés entre eux par le joint à déchirer (22), et le couvercle (10) comprenant un élément de cadre extérieur (11) périphérique pouvant être fixé à l'élément d'habillage (8) adjacent, une pièce façonnée intérieure entourée par l'élément de cadre extérieur (11) et, sur le côté tourné vers le passager, un revêtement décoratif (19) en deux parties reliées entre elles par un joint à déchirer (22), la pièce façonnée intérieure étant séparée, lors d'un déclenchement du sac gonflable, en deux moitiés de clapet (12, 13) pouvant pivoter, **caractérisé en ce que** l'élément de cadre extérieur (11) et les deux moitiés de clapet (12, 13) sont réalisés d'un seul tenant, les moitiés de clapet (12, 13) étant reliées à l'élément de cadre extérieur (11) par un affaiblissement (14) périphérique, à l'exception d'une zone de charnière supérieure et d'une zone de charnière inférieure, tandis que dans la zone du joint à déchirer (22), les deux moitiés de clapet (12, 13) s'étendent à faible distance l'une de l'autre et ne sont reliées entre elles que par d'étroites pattes de liaison (17) verticales, disposées par endroits, et **en ce que** sur la face intérieure des deux moitiés de clapet (12, 13) sont prévues des tôles de maintien (23, 24) à paroi mince qui relient entre eux l'élément de cadre (11) situé à l'extérieur et la moitié de clapet (12, 13) adjacente, chaque tôle de maintien passant, par au moins une section d'étrier (28, 28'), autour du côté extérieur de l'élément de cadre (11).

2. Dispositif de protection contre une collision latérale selon la revendication 1, **caractérisé en ce que** des limiteurs d'ouverture (35) sous la forme de pattes verticales sont disposés par endroits entre l'élément de cadre extérieur (11) et la moitié de clapet (12, 13) adjacente - face à la zone de liaison (15) commune -.

3. Dispositif de protection contre une collision latérale selon la revendication 1, **caractérisé en ce que** pour chaque moitié de clapet (12, 13) est prévue son propre élément d'habillage (20, 21) et **en ce que** les deux éléments d'habillage (20, 21) sont reliés entre eux par le joint à déchirer (22).

4. Dispositif de protection contre une collision latérale selon la revendication 1, **caractérisé en ce qu'**il est prévu un revêtement (19) en une partie pour les deux moitiés de clapet (12, 13), lequel présente dans la zone de liaison (15) commune un joint à déchirer (22) réalisé au moyen d'un laser.

5. Dispositif de protection contre une collision latérale selon la revendication 1, **caractérisé en ce que** chaque tôle de maintien (23, 24) est reliée à la moitié de clapet (12, 13) adjacente par une ou plusieurs soudures aux ultrasons (29).

6. Dispositif de protection contre une collision latérale selon une ou plusieurs des revendications précédentes, **caractérisé en ce que** chaque tôle de maintien (23, 24) comporte une bride de fixation (25, 25') allongée reliée à la moitié de clapet (12, 13), laquelle bride est reliée par une section de charnière (26, 26') relativement étroite à une section de maintien extérieure (27, 27'), et **en ce que** sur la section de maintien extérieure (27, 27') sont prévues par endroits les sections d'étrier (28, 28') en U.

7. Dispositif de protection contre une collision latérale selon une ou plusieurs des revendications précédentes, **caractérisé en ce qu'**il est prévu sur une moitié de clapet (13) une ouverture de montage (38) pouvant être fermée par un bouchon (37) inséré, à travers laquelle on peut insérer une vis de fixation (39) pour fixer la tôle de maintien (24) située derrière, sur un boîtier (3) de l'airbag.

8. Dispositif de protection contre une collision latérale selon une ou plusieurs des revendications précédentes, **caractérisé en ce que** l'élément de cadre (11) du couvercle (10) et la section de maintien extérieure (27, 27') des deux tôles de maintien (23, 24) peuvent être fixés par endroits par soudage aux ultrasons (30), sur l'élément d'habillage (8) adjacent.

9. Dispositif de protection contre une collision latérale selon une ou plusieurs des revendications précédentes, **caractérisé en ce que** sur la moitié de clapet supérieure (12) sont disposées, des deux côtés de la section de charnière (26) de la tôle de maintien (23), plusieurs nervures de renfort (36) s'étendant verticalement.

10. Dispositif de protection contre une collision latérale selon une ou plusieurs des revendications précédentes, **caractérisé en ce que** le couvercle (10) est formé par une pièce moulée par injection d'un seul tenant en Santoprene.
